# FASCICULE DE BREVET EUROPEEN

(11) **EP 1 513 434 B1**
(45) Date de publication et mention de la délivrance du brevet: **26.09.2007**
(21) Numéro de dépôt: 03760718.1
(22) Date de dépôt: 27.05.2003
(51) Int. Cl.: A47J 31/36

(54) **MACHINE A CAFE DU TYPE ESPRESSO A RESERVOIR D'EAU AMOVIBLE**
KAFFEEMASCHINE FÜR ESPRESSO MIT ABNEHMBAREN WASSERTANK
ESPRESSO COFFEEMAKER WITH REMOVABLE WATER RESERVOIR

(30) Priorité: 19.06.2002 FR 0207557
(43) Date de publication de la demande: 16.03.2005
(73) Titulaire: SEB S.A., 69130 Ecully (FR)
(72) Inventeur: LAFOND, Jean Marie, F-65420 Ibos (FR); CHARLES, Patrick, F-65290 Louey (FR); ROUCHES, Alexandre, F-65310 Horgues (FR)
(74) Mandataire: Kiehl, Hubert
(86) Numéro de dépôt international: PCT/FR2003/001593
(87) Numéro de publication internationale: WO 2004/000083

(56) Documents cités:
- FR-A- 2 292 662
- FR-A- 2 316 901
- FR-A- 2 544 604
- US-A- 3 927 802

## Description

La présente invention concerne les cafetières électriques du type expresso comportant un réservoir d'eau froide, une pompe électrique, un ensemble formant chaudière et un récipient filtrant destiné à recevoir la mouture de café qui sera infusée par l'eau chaude sous pression en provenance de la chaudière.

L'ensemble de chaudière, ci-après appelé thermobloc, est généralement constitué d'un élément chauffant électrique en relation thermique avec un circuit d'eau, l'eau étant mise en circulation lors du fonctionnement de la pompe. En fin de cycle d'élaboration du café boisson, il est nécessaire de réaliser une détente de pression dans le circuit hydraulique de la machine, cette détente se faisant pour la grande majorité des machines à café en redirigeant le flux d'eau sous pression vers le réservoir d'eau froide qui reçoit ainsi le flux de retour.

Une telle machine à café est connue du document FR 2 316 901 où une pompe est montée dans le socle de la machine et un réservoir d'eau froide dans la colonne verticale reliant le socle à la partie supérieure de la machine. Le réservoir est monté amovible en étant positionné dans une monture appartenant au socle de la machine. La monture recevant le réservoir amovible présente un alésage cylindrique en partie supérieure destiné à communiquer avec l'orifice de sortie du réservoir et un fond communiquant avec deux tubulures tournées vers le bas reliées l'une au conduit d'aspiration de la pompe et l'autre à un conduit de retour dans le réservoir. Fonctionnant à satisfaction, on s'est rendu compte que, dans la situation où l'utilisateur retire d'une manière intempestive le réservoir de son siège au moment où un flux d'eau chaude sous pression arrive vers le réservoir, le retour se fait sous forme d'un jet puissant et chaud et les éclaboussures projetées risquent alors de brûler l'utilisateur. De plus, il y a rejet sur le plan de travail d'une quantité importante d'eau chaude.

Afin de pallier à ce problème, quelques solutions ont été envisagées consistant, par exemple, à faire appel à un circuit électronique utilisant un capteur de détection de la présence du réservoir, les informations du capteur étant ensuite utilisées par ce circuit pour commander le cycle de fonctionnement de la machine. Ces solutions compliquent la réalisation d'une machine à café et en augmentent le coût de fabrication.

Une solution simplifiée est décrite dans le document FR 2 544 604 où le poids du réservoir pousse un levier de commande qui actionne un interrupteur du circuit électrique de la machine, rendant possible le fonctionnement de cette dernière seulement à partir d'un poids préétabli. Toutefois, la simple détection du poids du réservoir ne suffit pas pour assurer un retour correct du flux d'eau sous pression vers le réservoir, faut-il encore que ce dernier soit correctement mis en place. Faute d'une mise en communication correcte d'un réservoir amovible avec son siège assurant l'étanchéité, les débordements du flux de retour s'accumulent autour du siège du réservoir provoquant des fuites salissantes et des problèmes de nettoyage par la suite.

Le but de la présente invention est de remédier aux inconvénients précités et de proposer une machine à café du type expresso à réservoir amovible de fonctionnement efficace tout en assurant une protection accrue de l'utilisateur lorsqu'il se sert de la machine.

Un autre but de l'invention est une machine à café du type expresso d'entretien facile, évitant tout problème de débordement ou d'écoulement d'eau incontrôlé lorsque le réservoir amovible est manipulé par l'utilisateur.

Un but supplémentaire de l'invention est une machine à café du type expresso de construction simple et peu coûteuse, tout en étant fiable en fonctionnement.

Ces buts sont atteints avec une machine à café du type expresso présentant un réservoir amovible relié à un circuit hydraulique principal comportant une pompe qui aspire l'eau du réservoir et l'envoie dans un thermobloc et d'ici à travers la mouture de café contenue dans un porte-filtre, ledit réservoir étant également relié à un circuit hydraulique permettant le retour de l'eau sortant du thermobloc, du fait que le dispositif de connexion dudit réservoir avec lesdits circuits hydrauliques comporte des moyens de détente du jet d'eau arrivant par le circuit hydraulique de retour au réservoir et des moyens d'orientation dudit jet vers une zone de stockage.

Ainsi, ce dispositif de connexion assure tout d'abord une communication étanche entre le réservoir d'eau froide de la machine et le reste du circuit hydraulique. Cette liaison étanche peut être réalisée par un joint torique appartenant audit dispositif de connexion ou au réservoir, joint situé entre deux tubulures rentrantes des deux pièces en communication. La tubulure du réservoir comporte généralement un clapet qui ferme automatiquement l'accès au réservoir lorsqu'il est enlevé de son siège et qui ouvre le passage vers le circuit hydraulique de la machine lorsque le réservoir est remis en place.

Le dispositif de connexion a également le rôle de mettre en communication le réservoir d'eau froide avec le circuit hydraulique principal, qui le relie au conduit d'aspiration de la pompe, ainsi qu'au circuit de retour vers le réservoir par une conduite de détente.

Selon l'invention, le dispositif de connexion comporte des premiers moyens de détente du jet d'eau qui revient vers le réservoir. Lors du fonctionnement de la machine, plus particulièrement en fin de cycle d'élaboration du café boisson, la pression doit être abaissée dans le circuit hydraulique sortant du thermobloc et pour cette raison, le flux d'eau chaude est renvoyé par la conduite de détente vers le réservoir. Si le réservoir est en communication avec la conduite de détente, ce flux retourne dans le réservoir. Par contre, si le réservoir n'est pas en place, le flux puissant de retour est de toute manière brisé par lesdits premiers moyens ce qui a pour effet d'obtenir un jet tranquille et de protéger ainsi l'utilisateur contre les éclaboussures d'eau chaude sous pression.

Le dispositif de connexion de l'invention comporte de plus des deuxièmes moyens d'orientation du flux d'eau de retour vers une zone de stockage. Ainsi, le jet tranquille obtenu avec les premiers moyens est ensuite orienté vers une zone permettant de collecter ce flux de retour, notamment dans le cas où le réservoir est absent ou s'il est mal positionné ou encore, si pour une quelconque raison, l'étanchéité entre ce dernier et le dispositif de connexion est rompue. Ceci permet d'éviter les débordements à l'extérieur de la machine ou d'empêcher l'accumulation d'eau stagnante à l'intérieur de cette dernière dans des zones difficilement accessibles pour le nettoyage.

Avantageusement, les moyens de détente orientent le jet d'eau dans une direction autre que celle de l'axe principal du dispositif de connexion dudit réservoir avec les circuits hydrauliques de la machine.

Par axe principal du dispositif de connexion du réservoir on comprend notamment l'axe de la tubulure du réservoir où est agencé le clapet, voire l'axe du clapet. Cet axe est, pour la plupart des applications, vertical ou normal au plan de travail, mais il peut également être agencé selon une autre direction. Le fait d'orienter le jet d'eau de retour dans une direction différente de celle de l'axe principal du dispositif de connexion du réservoir, fait que le jet puissant subit une perte de charge et en même temps il est dévié de la direction normale au plan de travail ou au plan d'assise du dispositif de connexion, faisant qu'il protège ainsi l'utilisateur lorsque le jet de retour se fait en l'absence du réservoir.

De préférence, ledit dispositif de connexion comporte un alésage central le mettant en communication d'un côté avec ledit réservoir, de l'autre côté l'alésage débouchant dans deux orifices communiquant l'un avec le circuit hydraulique principal et l'autre avec le circuit hydraulique de retour, où lesdits moyens de détente du jet d'eau sont agencés dans le prolongement de l'axe de l'orifice qui communique avec le circuit hydraulique de retour.

Ainsi, le jet turbulent qui arrive par le circuit de retour dans l'orifice prévu à cet effet dans le dispositif de connexion est calmé par des moyens de détente qui sont agencés dans l'axe de cet orifice ayant ainsi un effet direct sur le jet puissant sous pression. Ce jet de retour subit une perte de charge venant en contact avec les moyens de détente, ce qui le rend moins dangereux pour l'utilisateur.

Utilement, lesdits moyens de détente comprennent une pluralité d'ailettes parallèles agencées en alternance sur un axe commun.

Ces ailettes constituent un dispositif tampon pour le jet puissant de retour et, de par leur agencement sur un axe débouchant dans l'orifice d'arrivée du jet d'eau de retour, obligent ce jet d'eau à suivre un parcours sinueux ayant pour effet une perte de charge importante et l'obtention d'un jet d'eau suffisamment calme pour pouvoir être orienté ou récupéré par la suite.

Avantageusement, ledit axe commun comporte un déflecteur situé dans l'axe du clapet de fermeture du réservoir lorsque ce dernier est raccordé au dispositif de connexion.

Ainsi, avec un déflecteur situé sur l'axe supportant les ailettes assurant la détente du flux d'eau, notamment en partie supérieure de cet axe faisant face au réservoir d'eau, on assure l'ouverture du clapet de fermeture du réservoir lors de sa mise en place dans le dispositif de connexion d'une manière simple, sans faire appel à une pièce supplémentaire pour mettre en communication le réservoir avec le reste du circuit hydraulique de la machine.

De préférence, lesdits moyens d'orientation du jet d'eau sont agencés en aval desdits moyens de détente du jet d'eau dans la direction d'écoulement de ce dernier.

On aurait pu imaginer d'orienter d'abord le jet d'eau turbulent vers une zone de récupération et le détendre par la suite, mais on a observé qu'il est plus avantageux de le détendre en premier, car un jet d'eau calme est plus facile à canaliser par la suite vers une zone de récupération ou de stockage.

Avantageusement, lesdits moyens d'orientation du jet d'eau comportent au moins un passage mettant en communication l'intérieur de l'alésage du dispositif de connexion avec un entonnoir entourant ledit alésage.

Ainsi, le jet d'eau détendu à l'intérieur de l'alésage central du dispositif de connexion, est orienté vers un espace proche de cet alésage et concentrique avec ce dernier, un passage étant prévu pour établir une communication entre lesdits espaces contenant le fluide qui est de retour vers le réservoir.

De préférence, lesdits moyens d'orientation du jet d'eau de la machine à café de l'invention comportent un premier passage situé en aval d'un joint torique réalisant l'étanchéité entre le réservoir et l'alésage du dispositif de connexion tel que vu dans le sens d'écoulement du jet d'eau de retour vers le réservoir.

Ainsi, lorsque le réservoir est mis en place et que le joint torique réalise l'étanchéité entre le réservoir et l'alésage central du dispositif de connexion, le jet de retour est reconduit à l'intérieur du réservoir. Par contre, si le réservoir est absent ou mal positionné, le joint d'étanchéité n'assure plus son rôle, ce qui fait que le jet d'eau de retour est dirigé par un passage situé juste à coté et en aval du joint d'étanchéité dans une zone de stockage constituée par l'entonnoir entourant ledit alésage. Ce premier passage peut être aménagé au bord supérieur dudit alésage ou en pratiquant une ouverture située au plus près de l'emplacement du joint d'étanchéité afin d'éviter au jet de retour d'effectuer de longs parcours avant d'atteindre la zone de stockage.

De préférence, ledit premier passage est réalisé entre la partie supérieure de l'alésage et la face interne d'une platine apposée sur l'entonnoir.

Dans cette configuration, une platine est prévue en partie supérieure de l'entonnoir, au moins une ouverture étant prévue entre les deux ce qui fait que le jet d'eau de retour suit cette ouverture pour atteindre l'intérieur de l'entonnoir. Le jet d'eau est ainsi facilement canalisé vers l'entonnoir fermé par ladite platine, ce qui évite tout débordement ou éclaboussure à l'intérieur de ce dernier, par exemple suite à des projections touchant les parois internes de l'entonnoir, etc. Utilement, lesdits moyens d'orientation du jet d'eau comportent un deuxième passage sous forme d'une ouverture pratiquée dans la platine, ouverture située en aval du premier passage tel que vu dans le sens d'écoulement du jet d'eau de retour vers le réservoir.

Ainsi, au cas où le jet d'eau de retour n'est pas suffisamment freiné par les moyens de détente, des débordements peuvent monter et dépasser ce premier passage. Ces débordements sont ensuite recueillis par ladite ouverture située à un niveau supérieur par rapport audit premier passage dans le sens d'écoulement du jet d'eau, ce qui assure encore plus de contrôle du jet d'eau de retour, permettant de le canaliser vers l'entonnoir même en cas d'augmentation inattendue de la pression de ce dernier.

Avantageusement, lesdits moyens d'orientation du jet d'eau comprennent des nervures de canalisation situées de part et d'autre d'un orifice de la platine communiquant avec l'alésage du dispositif de connexion, nervures arrivant en proximité de ladite ouverture.

Ainsi, lesdits éventuels débordements traversant l'alésage du dispositif de connexion, arrivent sur la face supérieure de la platine munie de nervures de canalisation qui recueillent ces débordements et les canalisent vers ladite ouverture débouchant dans l'entonnoir qui capte ces débordements.

Utilement, lesdits moyens d'orientation du jet d'eau communiquent par un orifice d'évacuation de l'entonnoir avec un bac de récupération monté amovible dans la machine.

Ainsi, les débordements stockés temporairement dans l'entonnoir sont reconduits vers un bac de récupération de plus grandes dimensions que l'entonnoir et qui, de surcroît, est monté de manière amovible par rapport au corps de la machine permettant à l'utilisateur de le vider facilement. Ledit bac de récupération comprend un prolongement en gouttière formant un récupérateur venant sous un embout récupérateur auquel est raccordée une conduite d'évacuation de l'entonnoir.

Avantageusement, ledit bac de récupération maintient le support de récipient collecteur d'infusion.

Le support de récipient collecteur d'infusion est sous forme d'une grille maintenue sur son pourtour par le rebord du bac de récupération. Ceci permet de recueillir dans le même bac les éventuelles gouttes résultant de l'infusion du café. Ceci permet de maintenir propre l'environnement de la machine et d'en faciliter le nettoyage.

L'invention sera mieux comprise à l'étude des modes de réalisation pris à titre nullement limitatif et illustrés aux figures annexées dans lesquelles :
- la figure 1 représente une vue en coupe partielle longitudinale d'une machine à café selon l'invention;
- la figure 2 est une vue en perspective de la partie arrière de la machine avec le réservoir d'eau retiré de son siège et représenté à côté;
- la figure 3 représente une vue en perspective de la partie inférieure du socle de la machine, une partie des pièces constituant l'enveloppe extérieure de la machine étant enlevée pour faciliter la visualisation;
- la figure 4 est une vue en coupe axiale de la partie de connexion du réservoir avec la partie correspondante du socle de la machine.

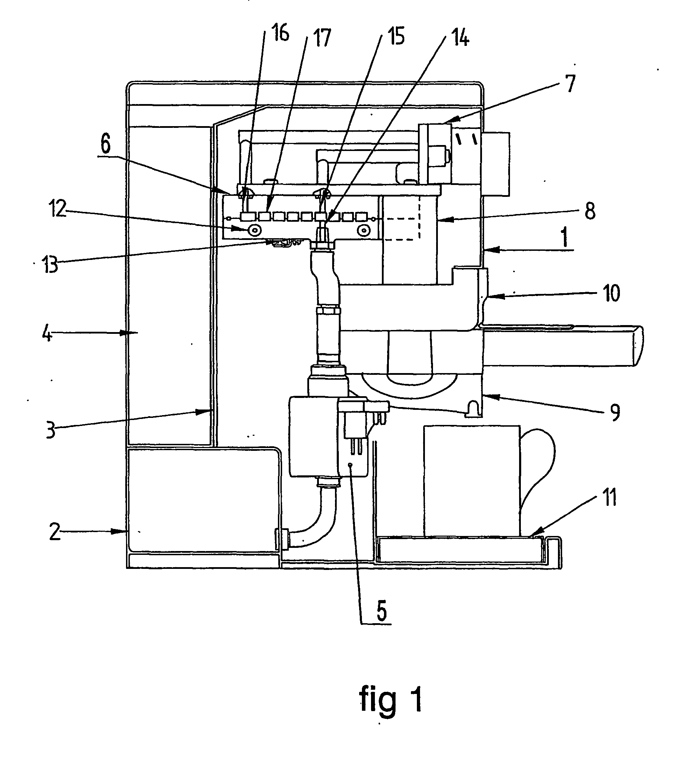

La figure 1 illustre une machine à café selon l'invention comportant un corps 1 dont la partie inférieure comprend un socle 2 qui est relié à la partie supérieure du corps 1 par un montant vertical 3 servant d'appui à un réservoir 4 d'eau froide. Le corps 1 renferme le circuit hydraulique de la machine comportant le réservoir 4, une pompe 5, un thermobloc 6, un distributeur 7 et un vérin 8 de compression de la mouture de café.

La mouture de café est placée dans une coupelle munie d'une paroi filtrante appelée porte-filtre 9 qui est, dans l'exemple décrit, monté coulissant selon une direction horizontale dans les rainures d'un support fixe de la tête d'infusion 10.

Le vérin 8 comporte un nez monté coulissant verticalement par rapport au corps 1 de la machine adapté à pénétrer, au cours de chaque cycle de fonctionnement, à l'intérieur du porte-filtre 9 afin de comprimer la mouture. L'eau fournie par la pompe 5 actionne le vérin hydraulique 8 qui pousse le nez contre la mouture. A partir d'une valeur prédéfinie de la pression, un clapet situé à l'intérieur dudit nez permet le passage de l'eau du thermobloc 6 vers le porte-filtre 9 d'où l'infusion s'écoule dans un récipient collecteur situé sur un support 11 du socle 2.

La machine a café comporte une chaudière ou thermobloc 6 destiné à chauffer l'eau sous pression fournie par la pompe 5 avant de l'injecter dans la mouture de café du porte-filtre 9. Le thermobloc 6 comprend des canaux échangeurs de chaleur 17 permettant la circulation de l'eau à l'intérieur du thermobloc 6 qui comprend par ailleurs un élément chauffant électrique 12 et un capteur de température 13. L'eau en provenance de la pompe 5 arrive par un canal d'entrée 14 du thermobloc 6 et peut ressortir suivant deux chemins de ce dernier, selon la position du distributeur 7. Soit l'eau sort froide par un canal de sortie 15, qui forme avec le canal d'entrée 14 un circuit très court ne permettant pas à l'eau de se réchauffer dans le thermobloc, soit l'eau sort chaude par un canal de sortie 16 après avoir circulé dans les canaux échangeurs de chaleur 17 du thermobloc 6.

En fin d'extraction du café boisson, le distributeur 7 est ramené en position de repos par l'utilisateur, ce qui fait que l'eau chaude sous pression du circuit hydraulique est envoyée par une canalisation de détente vers le réservoir 4.

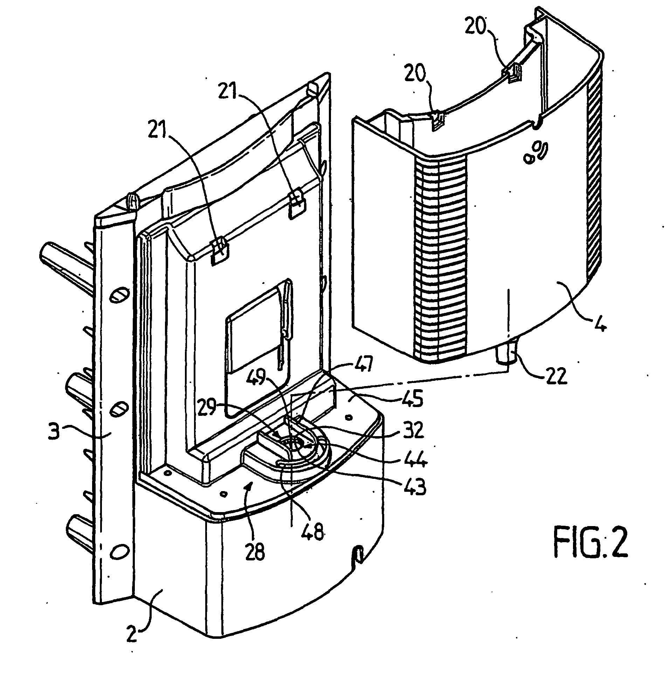

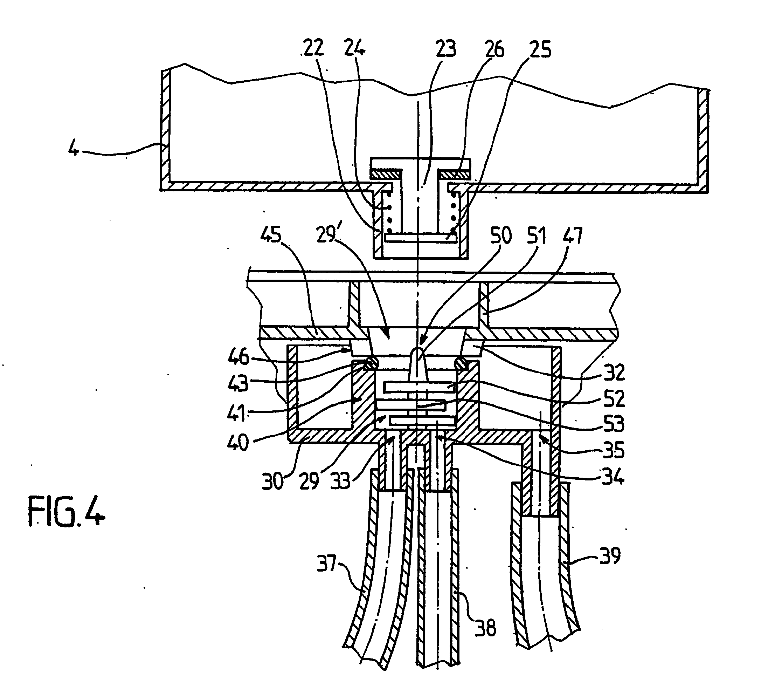

Le réservoir 4 est monté de manière amovible sur la machine de l'invention et il comporte, tel que visible à la figure 2, des crochets 20 qui peuvent s'engager dans des oeillets 21 prévus à cet effet dans la paroi frontale en vis à vis du montant vertical 3. Le réservoir 4 a une forme généralement parallélépipédique ouvert en sa partie supérieure pour faciliter son remplissage et fermé en sa partie inférieure par un clapet 23 (figure 4) situé à l'intérieur d'une colonne 22. Le clapet 23 est normalement fermé sous l'action d'un ressort de rappel 24 qui maintient sa partie supérieure 23 appuyée contre le fond du réservoir 4 par interposition d'une rondelle d'étanchéité 26. Lorsque le réservoir 4 est mis en place, la colonne 22 repose dans un alésage 29 du socle 2, des moyens étant prévus dans le socle pour ouvrir le clapet 23 et mettre en communication le liquide du réservoir 4 avec les conduites du circuit hydraulique de la machine.

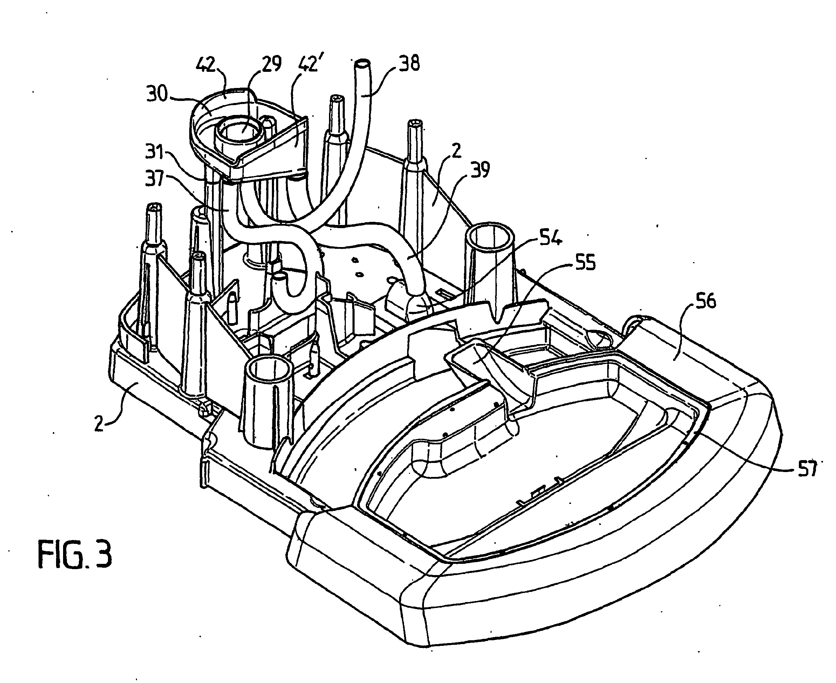

Tel que mieux visible aux figures 3 et 4, l'alésage 29 est pratiqué dans une pièce de forme concave appelée entonnoir 30 supportée par des plots de fixation 31 au socle 2 de la machine. La base de l'entonnoir 30 présente plusieurs orifices de communication avec les conduites du circuit hydraulique de la machine. Ainsi, deux orifices 33 et 34, sont pratiqués au fond de l'alésage 29, de part et d'autre de l'axe de ce dernier, et communiquent l'un avec une conduite de détente 37 et l'autre avec une conduite du circuit principal 38. Un orifice périphérique 35 est prévu pour mettre en communication l'entonnoir 30 avec une conduite d'évacuation 39.

Par conduite du circuit principal 38 on comprend une conduite qui relie l'entonnoir 30, respectivement le réservoir 4, à la pompe 5, alors que par conduite de détente 37 on comprend une conduite qui relie le conduit de sortie du thermobloc 6 à l'entonnoir 30. La conduite d'évacuation 39 relie quant à elle l'entonnoir 30 à un bac de récupération, tel qu'il sera expliqué par la suite.

Les conduites 37, 38 et 39 sont des tuyaux flexibles, réalisés par exemple en caoutchouc, qui sont raccordés sur des embouts creux verticaux matérialisant lesdits orifices 33, 34 et 35, tel que visible à la figure 4. De la même manière, l'extrémité opposée de chaque conduite est mise en communication par des éléments de raccordement du même type avec son élément de circuit hydraulique respectif.

L'alésage 29 est défini par le diamètre intérieur d'une paroi cylindrique 40 formée approximativement au centre de l'entonnoir 30. Tel que mieux visible à la figure 3, l'entonnoir 30 a une forme oblongue présentant, le long de son axe principal, une paroi frontale 42 recourbée et une paroi opposée 42' plane.

L'entonnoir 30 étant une pièce de forme assez complexe, elle peut avantageusement être réalisée en une matière plastique par une technique d'injection.

La surface supérieure de la paroi cylindrique 40 (figure 4) comporte une rainure 41 dans laquelle est placé un joint torique 43. Le joint torique 43 prend appui sur la surface extérieure de la colonne 22 du réservoir 4 lors de sa mise en place sur la machine à café, ce joint ayant le rôle d'assurer l'étanchéité entre le réservoir 4 et l'alésage 29 de la paroi cylindrique 40 de l'entonnoir 30, respectivement entre le réservoir 4 et le reste du circuit hydraulique de la machine. Le joint torique 43 est maintenu en place par les crénelures 46 d'une platine 45.

La platine 45 est positionnée au-dessus de l'entonnoir 30 de manière à le fermer au moins partiellement, cette platine 45 étant fixée à son tour par des plots de fixation prévus à cet effet dans le socle 2. La platine 45 présente dans sa partie centrale un orifice 29' traversant situé dans le prolongement de l'alésage 29 de la paroi cylindrique 40 de l'entonnoir 30 et ayant un diamètre légèrement supérieur au diamètre de ce dernier.

La surface interne de la platine 45, qui fait face à l'entonnoir 30, présente une couronne munie de crénelures 46 bordant l'orifice 29'. La partie pleine de ces crénelures 46 a le rôle de maintenir en place le joint torique 43, alors que les découpages situés entre deux crénelures 46 forment des passages 32 ayant le rôle de mettre en communication l'intérieur de l'alésage 29 avec son pourtour, donc avec la partie périphérique de l'entonnoir 30.

Sur la partie externe de la platine 45, faisant face au réservoir 4, sont réalisées deux nervures de guidage 47 parallèles entre elles, disposées de part et d'autre de l'orifice 29' en étant perpendiculaires aux parois frontales 42, 42'. La platine 45 présente, en bordure des nervures 47, une ouverture 48 qui permet à nouveau, mais à un niveau supérieur, la communication avec la partie périphérique de l'entonnoir 30. Par niveau supérieur on comprend un niveau situé en aval par rapport aux crénelures 46 dans le sens d'écoulement du flux de retour de l'eau chaude vers le réservoir en fin de cycle.

Par ailleurs et tel que représenté en figure 4, au fond de l'alésage 29 est fixé un ensemble brise jet 50 vertical d'axe longitudinal coaxial à celui de l'alésage 29 et, respectivement à celui de la colonne 22 du réservoir 4. L'ensemble brise jet comporte en sa partie supérieure un déflecteur 51 proéminent qui prend appui sur la partie inférieure 25 du clapet 23 afin de provoquer son ouverture lors de la mise en place du réservoir 4. La partie inférieure de l'ensemble brise jet 50 comporte plusieurs ailettes 52 agencées de manière décentrée en alternance, l'une au dessus de l'autre, le long de l'axe longitudinal de l'ensemble brise jet 50.

Tel que visible à la figure 4, deux ailettes adjacentes touchent avec une partie de leur périphérie les deux extrémités opposées de la surface intérieure de l'alésage 29, un cheminement en zigzag étant ainsi formé entre leurs extrémités libres, ce cheminement débouchant dans l'orifice 33 communiquant avec la conduite de détente 37. Les ailettes 52 peuvent avoir une forme de disque ou toute autre forme plane ou gauche adaptée au but recherché. Un tel agencement oblige le jet d'eau arrivant par le fond de l'alésage 29 à avoir un parcours sinueux, en sillonnant les chicanes formées par les extrémités décalées des ailettes 52, ce qui a pour effet la perte de charge ou la diminution de la pression du jet d'eau de retour vers le réservoir.

En référence à la figure 3, on remarque que la conduite d'évacuation 39 part du fond de l'entonnoir 30 et conduit le liquide collecté par ce dernier vers un récupérateur 55 situé en dessous d'un embout récupérateur 54 et communiquant avec ce dernier, embout sur lequel vient se raccorder la conduite d'évacuation 39. L'entonnoir 30 étant surélevé par rapport au récupérateur 55, le liquide collecté par l'entonnoir 30 s'écoule rapidement vers le récupérateur 55.

Le récupérateur 55 fait corps commun avec un bac de récupération 56 dont il constitue un prolongement en gouttière. Le bac de récupération 56 est avantageusement monté amovible par rapport au corps 1 de la machine et pour ceci il présente une forme rentrante sous le socle 2. Le bac de récupération 56 présente par ailleurs un rebord 57 sur lequel est installé le support 11 de tasse à café, support qui est sous forme d'une grille permettant de récolter dans le même bac 56 les éventuels écoulements résultant de l'infusion du café.

En fonctionnement, lorsque la cafetière arrive en fin de cycle d'extraction du café, l'utilisateur ramène le distributeur 7 en position de repos ce qui fait que le flux d'eau chaude sous pression qui se trouve encore dans le circuit hydraulique en sortie du thermobloc 6, est envoyé par une canalisation de détente 37 vers le réservoir 4. Dans son chemin, ce flux d'eau chaude turbulent est cassé par les ailettes 52 de l'ensemble brise jet 50 et il est canalisé vers une zone prévue à cet effet. Cette zone peut être le réservoir 4 lorsque ce dernier est bien mis en place afin qu'il communique de manière étanche avec l'alésage 29 de l'entonnoir 30.

Par contre, si au cours du retour du flux d'eau chaude vers le réservoir 4, l'utilisateur enlève de manière intempestive le réservoir 4, où également s'il le soulève légèrement de manière à ce que son clapet 23 poussé par le ressort de rappel 24 ferme la communication du réservoir 4 avec l'entonnoir 30, le flux de retour sera canalisé par le dispositif de l'invention vers la zone périphérique de l'entonnoir 30. Cette canalisation se fait à travers les découpages situés entre les crénelures 46 de la platine 45 pour un jet peu turbulent calmé par les ailettes 52 du brise jet 50. Au cas où le flux de retour ou de détente n'est pas suffisamment freiné par l'ensemble brise jet 50, il arrive sur la face supérieure de la platine 45 et les débordements sont canalisés à nouveau par les nervures de canalisation 47 de la platine 45 vers l'ouverture 48 et d'ici dans l'entonnoir 30. De l'entonnoir 30, les débordements arrivent par la conduite d'évacuation 39 dans le bac de récupération 56 où ils sont stockés avant de vider le bac.

D'autres variantes de réalisation de l'invention peuvent être envisagées sans sortir du cadre de ses revendications.

Ainsi, on peut imaginer que le joint torique 43 est tenu par une rainure pratiquée dans la paroi interne de l'alésage 29, le passage entre l'alésage 29 et l'entonnoir 30 en l'absence du réservoir 4 pouvant se faire par un espace ménagé entre le bord supérieur de l'alésage 29 et la face interne de la platine 45.

Dans une autre variante on peut imaginer que le joint torique 43 est tenu par la paroi de la colonne 22 du réservoir 4. On peut également envisager une étanchéité frontale entre la base de la colonne 22 du réservoir 4 et une surface correspondante du dispositif de connexion 28.

Dans encore une autre variante, on peut envisager l'utilisation d'autres moyens de détente, notamment sous forme d'ailettes souples issues d'une paroi périphérique installée dans la conduite de détente ou d'ailettes installées dans l'orifice de communication avec la conduite de détente du dispositif de connexion du réservoir.

## Revendications

1. Machine à café du type expresso présentant un réservoir (4) amovible relié à un circuit hydraulique principal comportant une pompe (5) qui aspire l'eau du réservoir (4) et l'envoie dans un thermobloc (6) et d'ici à travers la mouture de café contenue dans un porte-filtre (9), ledit réservoir (4) étant également relié à un circuit hydraulique de retour de l'eau sortant du thermobloc, **caractérisée en ce que** le dispositif de connexion (28) dudit réservoir (4) avec lesdits circuits hydrauliques comporte des moyens de détente (49) du jet d'eau arrivant par le circuit hydraulique de retour au réservoir et des moyens d'orientation (44) dudit jet vers une zone de stockage.

2. Machine à café selon la revendication 1, **caractérisée en ce que** les moyens de détente (49) orientent le jet d'eau dans une direction autre que celle de l'axe principal du dispositif de connexion (28) dudit réservoir (4) avec les circuits hydrauliques de la machine.

3. Machine à café selon l'une des revendications 1 ou 2, **caractérisée en ce que** ledit dispositif de connexion (28) comporte un alésage (29) central le mettant en communication d'un côté avec ledit réservoir (4), de l'autre côté l'alésage débouchant dans deux orifices (33,34) communiquant l'un (34) avec le circuit hydraulique principal et l'autre (33) avec le circuit hydraulique de retour, où lesdits moyens de détente (49) du jet d'eau sont agencés dans le prolongement de l'axe de l'orifice (33) qui communique avec le circuit hydraulique de retour.

4. Machine à café selon l'une des revendications précédentes, **caractérisée en ce que** lesdits moyens de détente (49) comprennent une pluralité d'ailettes (52) parallèles agencées en alternance sur un axe commun (53).

5. Machine à café selon la revendication 4, **caractérisée en ce que** ledit axe commun (53) comporte un déflecteur (51) situé dans l'axe du clapet de fermeture du réservoir (4) lorsque ce dernier est raccordé au dispositif de connexion (28).

6. Machine à café selon l'une des revendications précédentes, **caractérisée en ce que** lesdits moyens d'orientation (44) du jet d'eau sont agencés en aval desdits moyens de détente (49) du jet d'eau dans la direction d'écoulement de ce dernier.

7. Machine à café selon la revendication 6, **caractérisée en ce que** lesdits moyens d'orientation (44) du jet d'eau comportent au moins un passage mettant en communication l'intérieur de l'alésage (29) du dispositif de connexion (28) avec un entonnoir (30) entourant ledit alésage (29).

8. Machine à café selon la revendication 7, **caractérisé en ce que** lesdits moyens d'orientation (44) comportent un premier passage (32) situé en aval d'un joint torique (43) réalisant l'étanchéité entre le réservoir (4) et l'alésage (29) du dispositif de connexion (28) tel que vu dans le sens d'écoulement du jet d'eau de retour vers le réservoir (4).

9. Machine à café selon la revendication 8, **caractérisée en ce que** ledit premier passage (32) est réalisé entre la partie supérieure de l'alésage (29) et la face interne d'une platine (45) apposée sur l'entonnoir (30).

10. Machine à café selon la revendication 9, **caractérisée en ce que** lesdits moyens d'orientation (44) du jet d'eau comportent un deuxième passage sous forme d'une ouverture (48) pratiquée dans la platine (45), ouverture (48) située en aval du premier passage (32) tel que vu dans le sens d'écoulement du jet d'eau de retour vers le réservoir (4).

11. Machine à café selon la revendication 10, **caractérisée en ce que** lesdits moyens d'orientation (44) du jet d'eau comprennent des nervures de canalisation (47) situées de part et d'autre d'un orifice de la platine (45) communiquant avec l'alésage (29) du dispositif de connexion (28), nervures arrivant en proximité de l'ouverture (48).

12. Machine à café selon l'une des revendications 7 à 11, **caractérisée en ce que** lesdits moyens d'orientation (44) du jet d'eau communiquent par un orifice d'évacuation (35) de l'entonnoir (30) avec un bac de récupération (56) monté amovible dans la machine.

13. Machine à café selon la revendication 12, **caractérisée en ce que** ledit bac de récupération (56) comprend un prolongement en gouttière formant un récupérateur (55) venant sous un embout récupérateur (54) auquel est raccordée une conduite d'évacuation (39) de l'entonnoir (30).

14. Machine à café selon la revendication 12, **caractérisée en ce que** ledit bac de récupération (56) maintient un support de récipient collecteur d'infusion.

## Claims

1. An espresso type coffeemaker presenting a removable tank (4) connected to a main water circuit including a pump (5) that sucks water from the tank (4) and delivers it to a heater block (6), and from the heater block through coffee grounds contained in a filter carrier (9), said tank (4) also being connected to a water circuit for returning water leaving the heater block, the coffeemaker being **characterized in that** the device (28) connecting said tank (4) with said water circuits includes means (49) for reducing the pressure of the jet of water arriving via the water circuit returning to the tank, and means (44) for directing said jet towards a storage zone.

2. A coffeemaker according to claim 1, **characterized in that** the means (49) for reducing pressure direct the water jet in a direction other than that of the main axis of the device (28) connecting said tank (4) with the water circuits of the coffeemaker.

3. A coffeemaker according to claim 1 or claim 2, **characterized in that** the connection device (28) includes a central bore (29) putting it into communication at one end with said tank (4), the other end of the bore opening out into two orifices (33, 34) one (34) communicating with the main water circuit and the other (33) communicating with the return water circuit, wherein said means (49) for reducing the pressure of the water jet are arranged in line with the axis of the orifice (33) that communicates with said water return circuit.

4. A coffeemaker according to any preceding claim, **characterized in that** said means (49) for reducing pressure comprise a plurality of parallel fins (52) arranged in alternation about a common axis (53).

5. A coffeemaker according to claim 4, **characterized in that** said common axis (53) includes a deflector (51) situated on the axis of the valve member for closing the tank (4) when the tank is connected to the connection device (28).

6. A coffeemaker according to any preceding claim, **characterized in that** said means (44) for directing the jet of water are disposed downstream from said means (49) for reducing the pressure of the jet of water, downstream being in the flow direction of said jet of water.

7. A coffeemaker according to claim 6, **characterized in that** said means (44) for directing the water jet include at least one passage putting the inside of the bore (29) of the connection device (28) into communication with a funnel (30) surrounding said bore (29).

8. A coffeemaker according to claim 7, **characterized in that** said means (44) for directing the jet include a first passage (32) situated downstream from an O-ring (43) providing sealing between the tank (4) and the bore (29) of the connection device (28) as seen in the flow direction of the return water jet towards the tank (4).

9. A coffeemaker according to claim 8, **characterized in that** said first passage (32) is made between the top portion of the bore (29) and the inside face of a plate (45) placed on the funnel (30).

10. A coffeemaker according to claim 9, **characterized in that** means (44) for directing the water jet include a second passage in the form of an opening (48) formed in the plate (45), which opening (48) is situated downstream from the first passage (32) as seen in the flow direction of the return jet of water towards the tank (4).

11. A coffeemaker according to claim 10, **characterized in that** said means (44) for directing the water jet comprise channeling ribs (47) situated on either side of an orifice in the plate (45) communicating with the bore (29) of the connection device (28), said ribs extending to the proximity of the opening (48).

12. A coffeemaker according to any one of claims 7 to 11, **characterized in that** said means (44) for directing the water jet communicate via an exhaust opening (35) of the funnel (30) with a recovery vessel (56) removably mounted in the coffeemaker.

13. A coffeemaker according to claim 12, **characterized in that** said recovery vessel (56) includes a trough-shaped extension forming recovery means (55) coming under a recovery endpiece (54) that is connected to a duct (39) for emptying the funnel (30).

14. A coffeemaker according to claim 12, **characterized in that** said recovery vessel (56) maintains a support for an infusion-collector receptacle.

## Patentansprüche

1. Kaffeemaschine, vom Typ Espresso-Kaffeemaschine, mit einem abnehmbaren Behälter (4), der mit einem Haupthydraulikkreis verbunden ist, welcher eine Pumpe (5) aufweist, die das Wasser aus dem Behälter (4) ansaugt und in einen Thermoblock (6) und von dort aus durch das in einem Filterträger (9) enthaltene Kaffeemahlgut leitet, wobei der Behälter (4) auch mit einem Hydraulikkreis für das Zurücklaufen des aus dem Thermoblock austretenden Wassers verbunden ist, **dadurch gekennzeichnet, dass** die Vorrichtung (28) zur Verbindung des Behälters (4) mit den Hydraulikkreisen Mittel (49) zur Minderung des Drucks des Wasserstrahls, der über den Rücklaufhydraulikkreis zum Behälter gelangt, und Mittel (44) zum Leiten des Strahls zu einem Speicherbereich aufweist.

2. Kaffeemaschine nach Anspruch 1, **dadurch gekennzeichnet, dass** die Druckminderungsmittel (49) den Wasserstrahl in eine Richtung leiten, die sich von derjenigen der Hauptachse der Vorrichtung (28) zur Verbindung des Behälters (4) mit den Hydraulikkreisen der Maschine unterscheidet.

3. Kaffeemaschine nach Anspruch 1 oder 2, **dadurch gekennzeichnet, dass** die Verbindungsvorrichtung (28) eine mittlere Bohrung (29) aufweist, über die sie auf der einen Seite mit dem Behälter (4) verbunden ist, wobei die Bohrung auf der anderen Seite in zwei Öffnungen (33, 34) mündet, wobei die eine Öffnung (34) mit dem Haupthydraulikkreis und die andere Öffnung (33) mit dem Rücklaufhydraulikkreis verbunden ist, wobei die Mittel (49) zur Minderung des Drucks des Wasserstrahls in der Verlängerung der Achse der Öffnung (33) angeordnet sind, die mit dem Rücklaufhydraulikkreis verbunden ist.

4. Kaffeemaschine nach einem der vorhergehenden Ansprüche, **dadurch gekennzeichnet, dass** die Druckminderungsmittel (49) mehrere parallele Stege (52) aufweisen, die abwechselnd an einer gemeinsamen Achse (53) angeordnet sind.

5. Kaffeemaschine nach Anspruch 4, **dadurch gekennzeichnet, dass** die gemeinsame Achse (53) eine Ablenkeinrichtung (51) aufweist, die in der Achse des Ventilelements zum Verschließen des Behälters (4) angeordnet ist, wenn dieser mit der Verbindungsvorrichtung (28) verbunden ist.

6. Kaffeemaschine nach einem der vorhergehenden Ansprüche, **dadurch gekennzeichnet, dass** die Mittel (44) zum Leiten des Wasserstrahls in Strömungsrichtung des Wasserstrahls gesehen stromabwärts der Mittel (49) zur Minderung des Drucks dieses Wasserstrahls angeordnet sind.

7. Kaffeemaschine nach Anspruch 6, **dadurch gekennzeichnet, dass** die Mittel (44) zum Leiten des Wasserstrahls mindestens einen Durchgang aufweisen, der das Innere der Bohrung (29) der Verbindungsvorrichtung (28) mit einem Trichter (30) verbindet, welcher die Bohrung (29) umgibt.

8. Kaffeemaschine nach Anspruch 7, **dadurch gekennzeichnet, dass** die Leitmittel (44) einen ersten Durchgang (32) aufweisen, der in Strömungsrichtung des zum Behälter (4) zurücklaufenden Wasserstrahls gesehen stromabwärts einer torischen Dichtung (43) angeordnet ist, welche die Dichtigkeit zwischen dem Behälter (4) und der Bohrung (29) der Verbindungsvorrichtung (28) realisiert.

9. Kaffeemaschine nach Anspruch 8, **dadurch gekennzeichnet, dass** der erste Durchgang (32) zwischen dem oberen Teil der Bohrung (29) und der Innenfläche einer Platte (45) ausgebildet ist, welche auf dem Trichter (30) aufliegt.

10. Kaffeemaschine nach Anspruch 9, **dadurch gekennzeichnet, dass** die Mittel (44) zum Leiten des Wasserstrahls einen zweiten Durchgang in Form einer in der Platte (45) ausgebildeten Öffnung (48) aufweisen, wobei die Öffnung (48) in Strömungsrichtung des zum Behälter (4) zurücklaufenden Wasserstrahls gesehen stromabwärts des ersten Durchgangs (32) angeordnet ist.

11. Kaffeemaschine nach Anspruch 10, **dadurch gekennzeichnet, dass** die Mittel (44) zum Leiten des Wasserstrahls Kanalisierungsrippen (47) aufweisen, die auf der einen und auf der anderen Seite einer mit der Bohrung (29) der Verbindungsvorrichtung (28) verbundenen Öffnung der Platte (45) angeordnet sind und bis nahe der Öffnung (48) gelangen.

12. Kaffeemaschine nach einem der Ansprüche 7 bis 11, **dadurch gekennzeichnet, dass** die Mittel (44) zum Leiten des Wasserstrahls über eine Ablauföffnung (35) des Trichters (30) mit einem Auffangbecken (56) verbunden sind, das abnehmbar in der Maschine angebracht ist.

13. Kaffeemaschine nach Anspruch 12, **dadurch gekennzeichnet, dass** das Auffangbecken (56) eine rinnenförmige Verlängerung aufweist, die eine Auffangvorrichtung (55) bildet, welche unter einem Auffangendstück (54) angeordnet ist, an das eine Ablaufleitung (39) des Trichters (30) angeschlossen ist.

14. Kaffeemaschine nach Anspruch 12, **dadurch gekennzeichnet, dass** das Auffangbecken (56) einen Träger für ein Aufgusssammelgefäß hält.
